# DEMANDE DE BREVET EUROPEEN

(11) **EP 2 098 280 A1**
(43) Date de publication de la demande: **09.09.2009**
(21) Numéro de dépôt: 09153204.4
(22) Date de dépôt: 19.02.2009
(51) Int. Cl.: B01D 61/14, B63B 29/14, C02F 3/12, E03D 5/016, B01D 65/02

(54) **WC notamment pour bateau**

(30) Priorité: 22.02.2008 FR 0851146
(71) Demandeur: Plastimo France, 56100 Lorient (FR)
(72) Inventeur: Geneau, Bernard, 56530, Gestel (FR); Condroyer, Alain, 56100, Lorient (FR)
(74) Mandataire: Jacobson, Claude

(57) **Abrégé**

Ce WC notamment pour bateau, du type comportant un réacteur biologique (3) associé à des moyens de récupération d'eau comportant des moyens de filtrage (6) et des moyens de pompage (7) de cette eau récupérée dans un réservoir de stockage (9), est caractérisé en ce que les moyens de filtrage comprennent des moyens formant membrane d'ultrafiltration (6) et en ce que les moyens de pompage (7) comprennent une pompe réversible de réinjection d'eau dans le réacteur après une opération d'extraction, afin de nettoyer les moyens formant membrane d'ultrafiltration (6).

## Description

La présente invention concerne un WC.

Plus particulièrement, l'invention concerne un WC destiné à être embarqué par exemple à bord d'un bateau.

On sait que dans ce type d'applications, on rencontre principalement deux grands types de WC.

Le premier type concerne les WC chimiques.

Le second type concerne les WC à évacuation à travers un trou de la coque du bateau.

On conçoit cependant que ces WC présentent un certain nombre d'inconvénients, soit de capacité et/ou de manipulation pour le premier type soit vis-à-vis de l'environnement pour le second type.

Le but de l'invention est donc de résoudre ces problèmes.

A cet effet, l'invention a pour objet un WC notamment pour bateau, du type comportant un réacteur biologique associé à des moyens de récupération d'eau comportant des moyens de filtrage et des moyens de pompage de cette eau récupérée dans un réservoir de stockage, caractérisé en ce que les moyens de filtrage comprennent des moyens formant membrane d'ultrafiltration et en ce que les moyens de pompage comprennent une pompe réversible de réinjection d'eau dans le réacteur après une opération d'extraction, afin de nettoyer les moyens formant membrane d'ultrafiltration.

Suivant des modes particuliers de réalisation, le WC comporte une ou plusieurs des caractéristiques suivantes, prise(s) isolément ou suivant toutes les combinaisons techniquement possibles :
- le réservoir de stockage est formé par un réservoir de chasse,
- le réservoir est formé par un réservoir tampon,
- le réacteur est associé à des moyens d'aération,
- les moyens de pompage comprennent une pompe réversible de type à engrenage.

L'invention sera mieux comprise à l'aide de la description qui va suivre, donnée uniquement à titre d'exemple et faite en se référant aux dessins annexés, sur lesquels :
- la figure 1 représente un schéma synoptique illustrant la structure et le fonctionnement d'un premier mode de réalisation d'un WC selon l'invention ; et
- la figure 2 représente un schéma synoptique illustrant la structure et le fonctionnement d'un second mode de réalisation d'un WC selon l'invention.

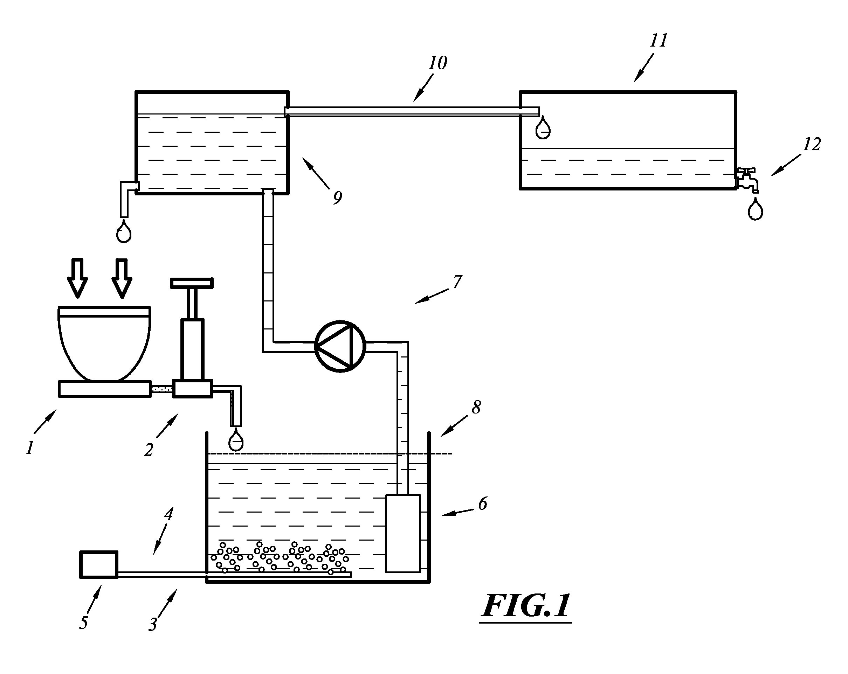

Comme cela est illustré sur ces figures et en particulier sur la figure 1, l'invention concerne de façon générale un WC notamment pour bateau.

Ce WC comporte une cuvette désignée par exemple par la référence générale 1 associée à des moyens de chasse désignés par la référence générale 2 et raccordée à un réacteur biologique désigné par la référence générale 3.

Ce réacteur contient alors de l'eau, des déchets et des bactéries. Il est par ailleurs associé à des moyens d'aération par microbullage comprenant par exemple une pompe à air. Les moyens d'aération sont désignés par la référence générale 4 tandis que la pompe à air est désignée par la référence générale 5.

De plus, le réacteur est associé à des moyens de récupération d'eau comportant des moyens de filtrage désignés par la référence générale 6 sur cette figure associés à des moyens de pompage désignés par la référence générale 7 pour par exemple lorsque le niveau de liquide dans le réacteur a atteint une valeur de seuil par exemple 8, extraire de l'eau de ce réacteur pour l'injecter dans un réservoir de stockage tel que par exemple le réservoir de chasse désigné par la référence générale 9.

Ce réservoir de chasse peut par exemple également comporter un conduit de trop-plein désigné par la référence générale 10 raccordé à un réservoir de stockage d'eau excédentaire désigné par la référence générale 11 lui-même associé par exemple à des moyens d'évacuation 12.

Selon l'invention, les moyens de filtrage comprennent des moyens formant membrane d'ultrafiltration et les moyens de pompage 7 comprennent une pompe réversible de réinjection d'eau dans le réacteur à partir du réservoir de chasse après une opération d'extraction d'eau afin de nettoyer les moyens formant membrane d'ultrafiltration.

On sait en effet qu'au cours de l'extraction c'est-à-dire du pompage d'eau par les moyens de pompage 7, les moyens formant membrane d'ultrafiltration vont plus ou moins se colmater.

En réinjectant une petite quantité d'eau dans le réservoir à travers les moyens formant membrane d'ultrafiltration grâce à la pompe réversible 7, on nettoie alors ces moyens formant membrane.

L'exemple de réalisation qui vient d'être décrit fonctionne en cycle fermé c'est-à-dire que l'eau récupérée dans le réacteur est réinjectée dans le réservoir de chasse pour être réutilisée.

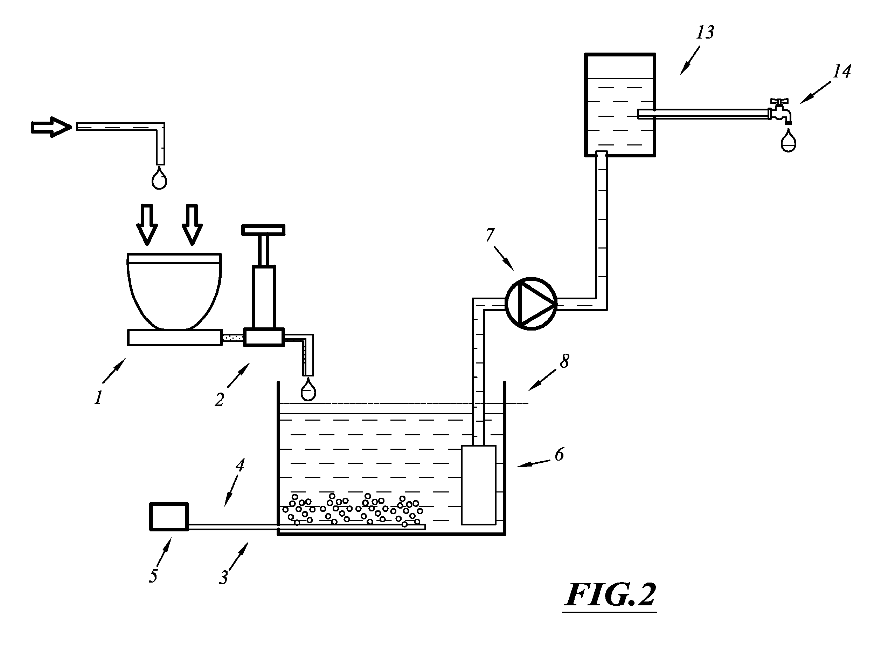

II va de soi bien entendu que d'autres modes de réalisation et notamment un mode de réalisation en cycle ouvert comme celui illustré sur la figure 2, peuvent être envisagés.

On reconnaît en effet sur cette figure 2, des éléments identiques ou analogues à ceux illustrés sur la figure 1, à savoir la cuvette 1, les moyens de chasse 2, le réacteur 3, les moyens d'aération 4, les moyens formant membrane d'ultrafiltration 6 et la pompe réversible 7.

Cependant dans l'exemple de réalisation illustré sur cette figure 2, l'eau extraite du réacteur n'est pas injectée dans le réservoir de chasse mais dans un réservoir tampon 13 associé à des moyens d'évacuation de trop-plein 14. Cependant, dans cet exemple de réalisation encore, la pompe 7 permet de réinjecter une petite quantité d'eau à travers les moyens formant membrane d'ultrafiltration dans le réacteur afin de nettoyer ceux-ci.

A titre d'exemple, la pompe réversible peut par exemple être formée par une pompe à engrenage.

Une telle structure permet également d'éviter tout problème de contamination dû à l'utilisation de vannes ou autres.

## Revendications

1. WC notamment pour bateau, du type comportant un réacteur biologique (3) associé à des moyens de récupération d'eau comportant des moyens de filtrage (6) et des moyens de pompage (7) de cette eau récupérée dans un réservoir de stockage (9 ; 13), **caractérisé en ce que** les moyens de filtrage comprennent des moyens formant membrane d'ultrafiltration (6) et **en ce que** les moyens de pompage (7) comprennent une pompe réversible de réinjection d'eau dans le réacteur après une opération d'extraction, afin de nettoyer les moyens formant membrane d'ultrafiltration (6).

2. WC selon la revendication 1, **caractérisé en ce que** le réservoir de stockage est formé par un réservoir de chasse (9).

3. WC selon la revendication 1, **caractérisé en ce que** le réservoir est formé par un réservoir tampon (13).

4. WC selon l'une quelconque des revendications précédentes, **caractérisé en ce que** le réacteur est associé à des moyens d'aération (4).

5. WC selon l'une quelconque des revendications précédentes, **caractérisé en ce que** les moyens de pompage (7) comprennent une pompe réversible de type à engrenage.
